# FASCICULE DE BREVET EUROPEEN

(11) **EP 1 241 763 B1**
(45) Date de publication et mention de la délivrance du brevet: **05.08.2015**
(21) Numéro de dépôt: 02290552.5
(22) Date de dépôt: 06.03.2002
(51) Int. Cl.: H02G 3/18

(54) **Ensemble comportant un socle et un mécanisme, entrant dans la composition d'un appareil électrique, et présentant des moyens d'encliquetage perfectionnés du mécanisme sur le socle**
Sockel- und Mechanismusanordnung für ein elektrisches Gerät mit verbesserten Schnappbefestigungsmitteln zwischen Sockel und Mechanismus
Assembly of a base and an mecanism for an electrical apparatus with improved snaplocking means between base and mecanism

(30) Priorité: 15.03.2001 FR 0103540
(43) Date de publication de la demande: 18.09.2002
(73) Titulaire: Legrand France, 87000 Limoges (FR); Legrand SNC, 87000 Limoges (FR)
(72) Inventeur: Hassmann, Eric, 87170 Isle (FR); Leyssenne, Henri, 19210 Lubersac (FR)
(74) Mandataire: Santarelli

(56) Documents cités:
- DE-U- 7 608 855
- DE-U- 29 807 106

## Description

L'invention a trait au domaine des appareils électriques du type comportant un boîtier fixé sur une paroi, tel qu'une prise de courant, de téléphone, de télévision, ou encore un interrupteur.

L'invention concerne plus particulièrement un ensemble adapté à entrer dans la composition d'un tel appareil électrique, du type comportant un mécanisme et un socle formant support du mécanisme et destiné à être fixé à une paroi telle qu'une paroi murale.

Le mécanisme, par lequel transite le courant, constitue la partie active de l'appareil. Aussi, afin d'éviter toute défaillance de ce dernier, il est nécessaire d'assurer un positionnement ferme et précis du mécanisme par rapport au socle.

Il existe à ce jour diverses techniques pour assurer la fixation du mécanisme au socle.

Une première technique consiste à visser frontalement le mécanisme au socle. Cette technique donne entière satisfaction pour ce qui est de la rigidité de la fixation, mais elle nécessite de prévoir sur le socle des parties filetées qui s'avèrent fragiles lors de montages et démontages successifs d'un mécanisme. Par ailleurs, la fixation par vissage s'avère longue, ce qui rend fastidieuse l'installation d'une multitude d'appareils de ce type.

Une deuxième technique consiste à faire coulisser le mécanisme dans une rainure appropriée ménagée dans le socle, jusqu'à ce que soit réalisé un encliquetage maintenant le mécanisme dans une position donnée. Bien entendu, afin de permettre ce coulissement, il est nécessaire de prévoir un jeu entre le socle et le mécanisme au niveau de la rainure, ce qui entraîne un manque de rigidité de la fixation.

Une troisième technique consiste à encliqueter frontalement le mécanisme sur le socle par des moyens d'encliquetage appropriés. Cette technique s'avère plus simple et plus rapide que les deux précédentes.

L'invention concerne un ensemble comportant un mécanisme électrique et un socle comportant une paroi de fond formant support pour ce mécanisme, ledit mécanisme étant apte à être maintenu par encliquetage sur ledit socle, ledit socle comportant des moyens d'encliquetage comportant un verrou élastiquement flexible qui comporte une portée d'appui en regard de ladite paroi mécanisme, est engagée entre ladite portée d'appui et ladite paroi de fond.

Un ensemble de ce type est décrit dans le document FR-A 2 770 047.

Le document DE29807106 décrit un ensemble selon le préambule de la revendication 1.

Bien qu'il soit couramment employé, ce type d'ensemble présente un certain nombre d'inconvénients.

En effet, si le montage du mécanisme sur le socle est tout à fait aisé, son démontage, qui peut être effectué au moyen d'un outil oblong tel qu'un tournevis, s'avère fastidieux, car il est nécessaire, pour écarter le verrou de la patte, de faire levier avec cet outil en prenant appui sur le mécanisme pour agir sur le verrou. Le plus souvent, l'outil glisse sur le verrou et il est nécessaire de s'y reprendre à plusieurs fois. Cette manipulation à tendance à endommager à la fois le verrou et le mécanisme.

L'invention vise notamment à palier les inconvénients précités, en proposant un ensemble socle/mécanisme qui, tout en bénéficiant des avantages pré-mentionnés de l'encliquetage, soit démontable à la fois facilement et rapidement en un minimum d'opérations.

A cet effet, et selon un premier aspect, l'invention propose un ensemble comportant un mécanisme électrique et un socle comportant une paroi de fond formant support pour ce mécanisme, ledit mécanisme étant apte à être maintenu par encliquetage sur ledit socle, ledit socle comportant des moyens d'encliquetage comportant un verrou élastiquement flexible qui comporte portée d'appui en regard de ladite paroi de fond, ledit mécanisme comprenant une patte qui, en position encliquetée du mécanisme, est engagée entre ladite portée d'appui et ladite paroi de fond, où il est prévu un interstice entre ladite portée d'appui et ladite paroi de fond ainsi qu'entre ladite patte et ledit verrou dans l'axe de la patte, cet interstice formant un passage débouchant à l'opposé de la paroi de fond, ce passage étant ainsi accessible, pour un outil apte à écarter ledit verrou de ladite patte pour dégager celle-ci de ladite portée d'appui.

La séparation du socle du mécanisme préalablement encliqueté peut être réalisée soit par l'introduction puis le pivotement de l'outil, soit, en fonction des dimensions relatives de l'interstice et de l'outil, et de la forme de ce dernier, par la seule introduction de l'outil. Ainsi, le démontage est à la fois simple et rapide, et n'entraîne pas d'endommagement du socle ou du mécanisme.

Selon un mode de réalisation, l'interstice est réalisé au moins en partie au moyen d'une encoche pratiquée dans le verrou, l'ensemble pouvant alors présenter les caractéristiques avantageuses mais non limitatives suivantes :
- le verrou comprend deux crans de verrouillage espacés, de part et d'autre de ladite encoche ;
- chaque cran présente une face d'appui en regard de la paroi de fond, contre laquelle est apte à venir en appui une face dite supérieure de la patte du mécanisme, les faces d'appui étant coplanaires et formant ensemble la portée d'appui ;
- chaque cran présente une face de butée sensiblement perpendiculaire à ladite face d'appui, et contre laquelle est apte à venir en appui une face d'extrémité de la patte du mécanisme, les faces de butée étant coplanaires, ladite encoche présentant une face, bordant ledit interstice du côté du verrou, qui est décalée par rapport aux dites faces de butée, vers l'extérieur du socle ;
- chaque cran présente, du côté opposé à sa face d'appui, une surface courbe sur laquelle est apte à appuyer et glisser, lors de l'encliquetage du mécanisme, un chanfrein pratiqué dans la patte de celui-ci, en vue d'écarter le verrou de la patte pour permettre l'encliquetage du mécanisme sur le socle.

Selon un mode de réalisation, le verrou présente, de part et d'autre desdits crans, deux butées en regard, contre lesquelles est apte à venir en appui ladite patte, ces butées étant propres à assurer l'immobilisation de ladite patte suivant une direction, dite transversale, sensiblement perpendiculaire à la direction d'encliquetage et à l'axe de la patte.

L'ensemble peut alors présenter les caractéristiques avantageuses mais non limitatives suivantes :
- le verrou présente deux faces inclinées, contre lesquelles est apte à appuyer et glisser, lors de l'encliquetage du mécanisme, la patte de celui-ci, ces faces inclinées étant propres à assurer le guidage et le positionnement de la patte par rapport au verrou, suivant la direction transversale ;
- lesdites butées et lesdites faces inclinées sont adjacentes ;
- ledit verrou comporte deux branches en saillie qui encadrent lesdits crans, chaque branche portant une dite butée et une dite face inclinée ;
- chaque branche présente une face d'extrémité contre laquelle est apte à venir en appui, en position encliquetée dudit mécanisme, une butée de la patte, en regard.

Par ailleurs, le socle peut comporter une languette flexible saillant de la paroi de fond en direction du verrou, sur laquelle est apte à venir en appui la patte du mécanisme, cette languette formant un ressort apte à solliciter la patte du mécanisme pour l'éloigner de la paroi de fond.

La patte dudit mécanisme peut, quant à elle, comporter une surépaisseur formant renfort, saillant d'une face dite supérieure de la patte, et qui, en position encliquetée du mécanisme, se trouve en regard dudit interstice.

Selon un mode de réalisation, l'interstice est réalisé au moins en partie au moyen d'une encoche pratiquée dans la patte.

Selon un deuxième aspect, l'invention propose un socle adapté à entrer dans la composition d'un ensemble tel que décrit ci-dessus, ledit socle comportant une paroi de fond formant support d'un mécanisme électrique adapté à entrer dans la composition du même ensemble, ainsi que des moyens d'encliquetage comportant un verrou élastiquement déformable en flexion suivant une direction dite longitudinale, et qui comporte une portée d'appui en regard de ladite paroi de fond, ledit verrou comprenant deux crans de verrouillage espacés, séparés par une encoche pratiquée dans le verrou, ladite encoche formant un passage débouchant à l'opposé de ladite paroi de fond.

Le socle peut présenter les caractéristiques avantageuses mais non limitatives suivantes :
- chaque cran présente une face d'appui en regard de ladite paroi de fond, lesdites faces d'appui étant coplanaires et formant ensemble ladite portée d'appui,
- chaque cran présente une face de butée perpendiculaire à la direction longitudinale, lesdites faces de butée étant coplanaires, ladite encoche présentant une face perpendiculaire à la direction longitudinale, décalée par rapport aux dites faces de butée vers l'extérieur du socle ;
- chaque cran présente, du côté opposé à ladite surface d'appui, une surface courbe ;
- le verrou se présente sous la forme d'une poutre, étendue suivant une direction dite transversale perpendiculaire à la direction longitudinale, et qui comporte un corps flottant par rapport à ladite paroi de fond, ledit corps portant lesdits crans et étant terminé par deux parties extrêmes rigidement ancrées dans la paroi de fond ;
- ladite poutre est déformable, de manière élastique, en flexion suivant la direction longitudinale, et en torsion autour d'un axe parallèle à la direction transversale ;
- le verrou est en saillie par rapport à ladite paroi de fond, le socle présentant un congé de raccordement entre ladite paroi de fond et lesdites parties extrêmes du verrou ;
- lesdites parties extrêmes sont inclinées par rapport au corps de verrou, en étant recourbées du côté du verrou où se trouve les crans ;
- lesdites parties extrêmes sont biseautées vers la paroi de fond ;
- le corps de verrou présente, au niveau de ladite encoche et du côté opposé auxdits crans, un décrochement formant renfort ;
- le corps de verrou comporte deux branches en saillie qui encadrent lesdits crans, chaque branche présentant une face de butée étendue parallèlement à la direction longitudinale et perpendiculairement à la paroi de fond ;
- chaque branche présente une face dite de guidage, située dans le prolongement de ladite face de butée du côté opposé à la paroi de fond, et inclinée par rapport à ladite face de butée ;
- le socle présente une découpe pratiquée dans la paroi de fond, formant un espace vide autour dudit corps de verrou ;
- le socle comprend une languette élastiquement flexible, saillant de la paroi de fond en direction dudit verrou, ladite languette présentant une face, dite supérieure qui, en l'absence de sollicitation, est inclinée par rapport à ladite paroi de fond ;
- ladite encoche présente un renfoncement en forme de portion de cylindre de révolution d'axe perpendiculaire à la paroi de fond.

Selon un troisième aspect, l'invention propose un mécanisme adapté à entrer dans la composition d'un ensemble tel que décrit ci-dessus, apte a être maintenu par encliquetage sur un socle adapté à entrer dans la composition du même ensemble, ledit mécanisme comportant à cet effet une patte en saillie, apte à coopérer avec des moyens d'encliquetage appartenant audit socle, une encoche étant pratiquée dans ladite patte dans l'axe de celle-ci, cette encoche comportant par exemple un renfoncement ayant la forme d'une portion de cylindre.

Selon un quatrième aspect, l'invention propose un appareil électrique du type comportant un socle pour sa fixation à une paroi, un mécanisme apte à être maintenu par encliquetage sur le socle qui forme un support dudit mécanisme, ainsi qu'une coiffe apte à recouvrir le socle et le mécanisme pour former une façade d'utilisation de l'appareil, où ledit socle et ledit mécanisme forment un ensemble tel que décrit ci-dessus.

Selon un cinquième aspect, l'invention propose un procédé pour séparer du socle d'un ensemble tel que précédemment décrit, un mécanisme du même ensemble préalablement encliqueté sur ledit socle, qui comporte les étapes suivantes :
- introduction, du côté du socle où se trouve le mécanisme, d'un outil oblong dans l'interstice entre le verrou et la patte,
- pivotement de l'outil autour d'un axe formé par une arrête du verrou située au droit dudit interstice, l'outil prenant appui, d'une part, sur cette arête, d'autre part, sur une arête de la patte, située au droit dudit interstice, pour écarter ledit verrou de ladite patte jusqu'au dégagement de celle-ci de ladite portée d'appui.

D'autres caractéristiques et avantages de l'invention apparaîtront à la lumière de la description qui va suivre de modes de réalisation donnés à titre d'exemples non limitatifs, description faite en référence aux dessins annexés dans lesquels :
- la figure 1 est une vue en perspective éclatée d'un appareil électrique selon l'invention ;

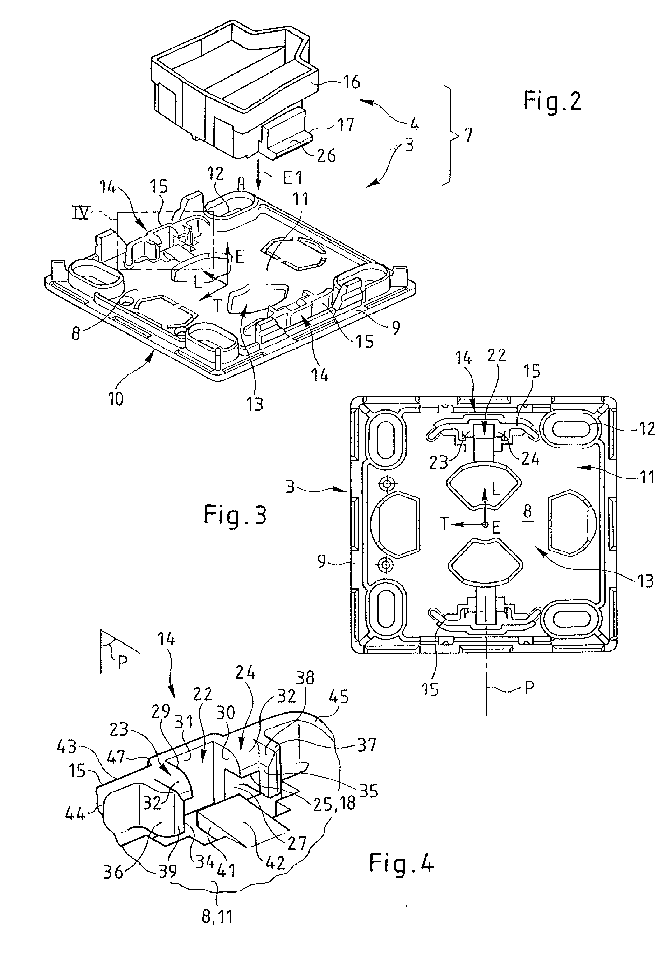

- la figure 2 est une vue en perspective éclatée d'un ensemble comportant un mécanisme et un socle, et entrant dans la composition d'un appareil électrique tel que représenté sur la figure 1 ;
- la figure 3 est une vue en plan de dessus du socle selon l'invention, représenté sur la figure 2 ;
- la figure 4 est une vue en perspective du socle selon un détail IV de la figure 2 ;
- la figure 5 est une vue en perspective de détail illustrant le socle et le mécanisme dans une position où ils sont écartés l'un de l'autre ;
- la figure 6 est une vue en coupe d'élévation longitudinale suivant le plan de coupe VI - VI de la figure 5 ;
- la figure 7 est une vue en perspective analogue à celle de la figure 5, dans une position où le mécanisme est encliqueté sur le socle ;
- la figure 8 est une vue en coupe d'élévation longitudinale suivant le plan de coupe VIII - VIII de la figure 7 ;
- la figure 9 est une vue similaire à celle de la figure 8, sur laquelle est également représentée la pointe d'un outil permettant de séparer le mécanisme du socle ;
- la figure 10 est une vue de détail en perspective illustrant le socle et le mécanisme en position encliquetée ;
- la figure 11 est une vue de détail en perspective d'une patte du mécanisme ;
- la figure 12 est une vue de détail en plan de dessus, du socle et du mécanisme en position encliquetée ;
- la figure 13 est une vue en coupe d'élévation longitudinale du mécanisme et du socle en position encliquetée, suivant le plan de coupe XIII - XIII de la figure 12;
- les figures 14, 15 et 16 sont des vues analogues respectivement à celles des figures 10, 12 et 13, suivant une variante de réalisation où l'interstice prévu entre le verrou du socle et la patte du mécanisme est de dimension réduite par rapport à celle de l'interstice prévu suivant le mode de réalisation des figures 10,12 et 13;
- les figures 17 à 20 sont des vues analogues respectivement aux vues des figures 10 à 13, suivant une autre variante de réalisation où l'interstice prévu entre le verrou du socle et la patte du mécanisme présente une forme permettant le passage d'un outil à section circulaire.

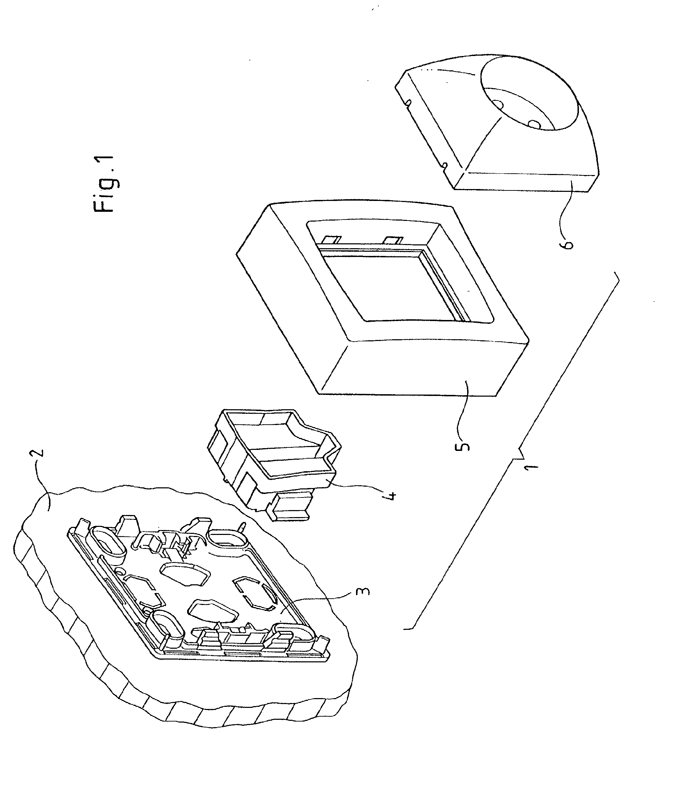

Sur la figure 1 est représenté un appareil électrique 1, en l'occurrence une prise électrique destinée à être fixée sur une paroi 2 telle qu'une paroi murale. Cet appareil 1 comprend un socle 3 destiné à être fixé sur la paroi 2, un mécanisme 4 formant la partie électrique active de l'appareil 1, un cadre 5 destiné à être rapporté sur le socle 3, notamment par encliquetage, ainsi qu'une coiffe 6 destinée à recouvrir le tout pour former une façade accessible aux utilisateurs de l'appareil 1.

Le cadre 5 et la coiffe 6 étant ici des éléments de type conventionnel, ils ne seront pas décrits en détail.

L'on décrit à présent l'ensemble 7 composé du socle 3 et du mécanisme 4.

Le socle 3 se présente sous la forme d'une platine à base carrée comportant une paroi de fond 8 sensiblement plane, formant support du mécanisme 4 et bordée par un cadre 9 délimitant le socle 3.

Pour des raisons de commodité, le socle 3 est décrit dans une position où il repose à plat, sa paroi de fond 8 étant étendue de manière sensiblement horizontale.

Encore pour des raisons de commodité, on définit le centre géométrique du socle 3 par l'intersection des diagonales de son cadre 9. Une localisation à proximité du centre du socle 3 sera dite intérieure, tandis qu'une localisation à distance du centre sera dite extérieure.

Par ailleurs, on définit arbitrairement un repère orthogonal direct, lié au socle 3, par trois directions orthogonales deux à deux, à savoir une direction dite longitudinale L sensiblement parallèle à un bord du cadre 9, une direction dite transversale T perpendiculaire à la direction longitudinale L et sensiblement parallèle à la paroi de fond 8, ainsi qu'une direction d'élévation E sensiblement perpendiculaire à la paroi de fond 8. Les termes "inférieur" et "supérieur" sont définis par rapport à la direction d'élévation E.

La paroi de fond 8 présente une première face 10, dite inférieure, destinée à être disposée en regard de la paroi 2 sur laquelle est destiné à être fixé le socle 3, ainsi qu'une deuxième face 11, dite supérieure, opposée à la première 10, du côté de laquelle se trouvent le mécanisme 4 et les autres constituants de l'appareil 1.

Dans chaque coin du cadre 9 sont pratiqués des trous oblongs 12 pour le passage de vis de fixation du socle 3 à la paroi 2.

Tout ce qui va être décrit à présent se trouve du côté supérieur du socle 3, c'est-à-dire du côté de la face supérieure 11 de sa paroi de fond 8.

Le socle 3 présente, au droit de la paroi de fond 8, une zone de réception 13 dans laquelle est apte à être disposé le mécanisme 4, bordée par des moyens d'encliquetage 14 de celui-ci.

Ces moyens d'encliquetage 14 comprennent deux verrous 15 en regard, qui se présentent sous la forme de pattes étendues transversalement et saillant de la paroi de fond 8 avec laquelle elles sont venues de matière.

Le mécanisme 4 comprend quant à lui un corps principal 16, ainsi que deux pattes 17 saillant du corps principal 16 et dont chacune est apte à coopérer avec un verrou 15 pour réaliser l'encliquetage du mécanisme 4 sur le socle 3.

Chaque verrou 15 présente une symétrie plane par rapport à un plan P d'élévation longitudinale, et l'on définit un axe A du verrou 15 par un axe situé dans le plan de symétrie P de celui-ci, et parallèle à la direction longitudinale.

Chaque patte 17 du mécanisme 4 présente également une symétrie plane par rapport à un plan P' qui, en position encliquetée du mécanisme 4, se trouve en élévation longitudinale confondu avec le plan P, et l'on définit un axe A' de la patte 17 par un axe contenu dans ce plan de symétrie P', et qui, en position encliquetée du mécanisme 4, est parallèle à direction longitudinale L et se trouve confondu avec l'axe A du verrou 15. L'axe A' définit la direction générale selon laquelle est étendue la patte 17.

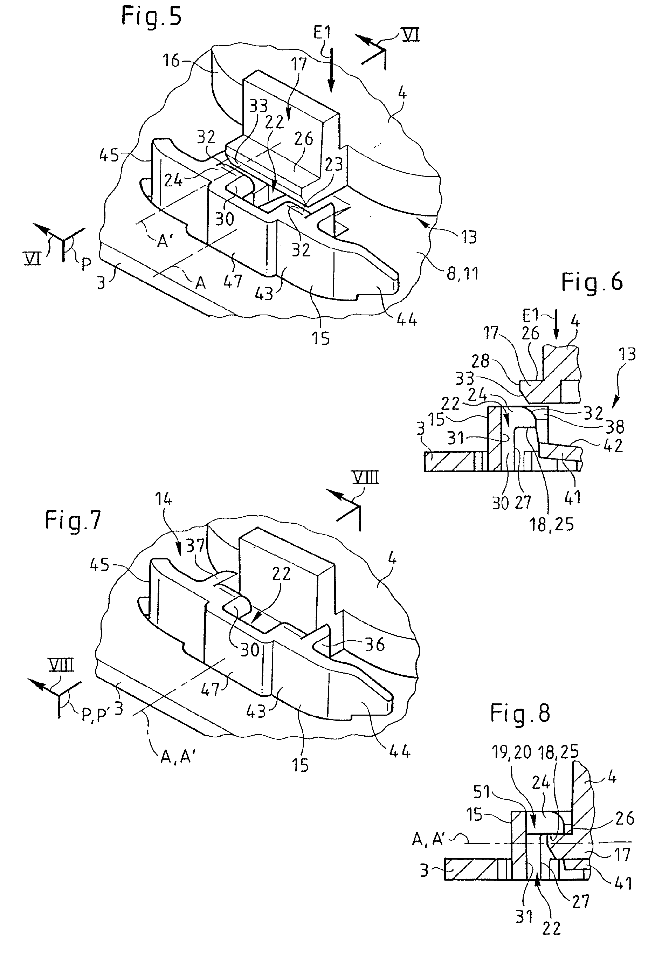

Le mécanisme 4 peut être encliqueté sur le socle 3 suivant une direction E1, dite d'encliquetage, parallèle à la direction d'élévation E (figures 5 et 6). Le mécanisme 4 peut toutefois être encliqueté de manière asymétrique, en insérant d'un côté l'une des pattes 17 dans le verrou 15 correspondant suivant une direction oblique, puis en faisant pivoter le mécanisme 4 en direction de la paroi de fond 8 et en encliquetant à force l'autre patte 17 dans l'autre verrou 15.

Le verrou 15 est apte à être déformé de manière élastique sous l'effet d'une contrainte ayant une composante longitudinale dirigée vers l'extérieur du socle 3. Cette contrainte est appliquée au verrou 15 par le mécanisme 4 lors de son encliquetage.

En l'absence de sollicitation, le verrou 15 est étendu globalement en élévation, sensiblement perpendiculairement à la paroi de fond 8.

Le verrou 15 comporte, en regard et à une certaine distance de la face supérieure 11 de la paroi de fond 8, une portée d'appui 18. En position encliquetée du mécanisme 4, la patte 17 de celui-ci se trouve engagée entre cette portée 18 et la paroi de fond 8.

Suivant l'invention, il est prévu un interstice 19 entre la patte 17 et le verrou 15, dans l'axe A' de la patte 17.

Cet interstice 19 forme un passage 20 débouchant à l'opposé de la paroi de fond 8, et accessible du côté de la face supérieure 11, pour un outil 21 apte à écarter le verrou 15 de la patte 17 pour dégager celle-ci de la portée 18 en vue de séparer du socle 3 le mécanisme 4, ce dernier ayant été préalablement encliqueté sur le socle 3.

Selon un mode de réalisation, cet interstice 19 est réalisé au moyen d'une encoche 22 pratiquée dans le verrou 15 dans l'axe A de celui-ci, de part et d'autre de laquelle sont formés deux crans de verrouillage 23, 24 espacés.

Chaque cran 23, 24 présente une face d'appui 25 en regard de la paroi de fond 8 et sensiblement parallèle à celle-ci, contre laquelle est apte à venir en appui une face supérieure 26 de la patte 17 du mécanisme 4, et qui est destinée à maintenir la patte 17 suivant la direction d'élévation.

Chaque cran 23, 24 présente en outre une face de butée 27 sensiblement perpendiculaire à la face d'appui 25, étendue suivant un plan d'élévation transversale, et contre laquelle est apte à venir en appui une face d'extrémité 28 de la patte 17.

Pour des raisons de simplicité de fabrication, la face supérieure 26 et la face d'extrémité 28 de la patte 17 sont sensiblement planes, les faces d'appui 25 et les faces de butée 27 étant alors respectivement coplanaires deux à deux. Les faces d'appui 25 forment ensemble la portée d'appui 18.

Les crans 23, 24 sont délimités transversalement par deux faces parallèles en regard 29, 30, étendues suivant un plan d'élévation longitudinale, qui bordent transversalement l'encoche 22. Celle-ci est bordée longitudinalement et vers l'extérieur par une face 31 étendue sensiblement suivant un plan d'élévation transversale.

Cette face 31, qui borde l'interstice 22 vers l'extérieur, du côté du verrou 15, est décalée par rapport aux faces de butée 27 des crans 23, 24, vers l'extérieur du socle 3.

Ainsi, en position encliquetée du mécanisme 4, il est possible d'introduire dans l'interstice 19 un outil 21 de dimensions appropriées et de l'insérer entre la face transversale 31 de l'encoche 22 et la face d'extrémité 28 de la patte 17 du mécanisme 4 en vue de séparer ce dernier du socle 3.

Afin de faciliter l'encliquetage du mécanisme 4, chaque cran 23, 24 présente, du côté opposé à sa face d'appui 25, une surface courbe 32 sur laquelle est apte à appuyer et glisser, lors de l'encliquetage, un chanfrein 33, adjacent à la face d'extrémité 28 de la patte 17, en vue d'écarter le verrou 15 de la patte 17, vers l'extérieur, sous la pression du mécanisme 4.

Par ailleurs, afin d'immobiliser transversalement le mécanisme 4 par rapport au socle 3 en position encliquetée, le verrou 15 présente de part et d'autre de la portée 18 deux surfaces de butées 34, 35 en regard, étendues suivant un plan d'élévation longitudinale contre lesquelles est apte à venir en appui la patte 17 qui se trouve alors immobilisée transversalement entre ces deux surfaces de butées 34, 35.

Selon un mode de réalisation illustré sur les figures, ces surfaces de butées 34, 35 sont formées par deux branches 36, 37 du verrou 15 qui saillent de celui-ci du même côté que les crans 23, 24 et encadrent ceux-ci transversalement.

A des fins de compacité, les branches 36, 37 jouxtent les crans 23, 24. Chaque branche 36, 37 s'étend longitudinalement au-delà du cran 23, 24 qu'elle jouxte, et présente dans sa partie supérieure, un chanfrein 38 formant une surface inclinée contre laquelle est apte à appuyer et glisser lors de l'encliquetage du mécanisme 4, la patte 17 de celui-ci, les chanfreins 38 étant propres, ensemble, à assurer le guidage et le positionnement transversal de la patte 17 par rapport au verrou 15.

En outre, chaque branche 36, 37 est terminée, vers l'intérieur du socle 3, par une face d'extrémité 39 contre laquelle est apte à venir en appui en position encliquetée du mécanisme 4, une butée 40 de la patte 17 en regard, cette butée 40 étant par exemple formée par un épaulement ou un décrochement, en vue d'immobiliser le mécanisme 4 suivant la direction longitudinale L, en position encliquetée.

Selon un mode de réalisation, le socle 3 comporte, dans la zone de réception 13, une languette 41 flexible saillant de la paroi de fond 8 en direction du verrou 15, sur laquelle est apte à venir en appui la patte 17 du mécanisme 4.

Cette languette 41 forme un ressort apte à solliciter la patte 17 pour l'éloigner de la paroi de fond 8 afin, premièrement, de plaquer la face supérieure 26 de la patte 17 contre la face d'appui 25 des crans 23, 24 et ainsi rattraper les jeux suivant la direction d'élévation E, et, deuxièmement, de provoquer l'éjection du mécanisme 4 lors de sa séparation du socle 3. A cet effet, la languette 41 présente une face supérieure 42 située dans le prolongement de la face supérieure 11 de la paroi de fond 8 et inclinée par rapport à celle-ci en direction de la portée 18.

Selon un mode de réalisation illustré sur les figures, le verrou 15 se présente sous la forme d'une poutre étendue suivant la direction transversale T, et qui comporte un corps 43 flottant par rapport à la paroi de fond 8, qui porte les crans 23, 24 et les branches 36, 37 précédemment décrites et dans lequel est pratiquée l'encoche 22, ce corps 43 étant terminé de part et d'autre par deux parties extrêmes 44, 45 rigidement ancrées dans la paroi de fond 8.

Cette poutre 15 est déformable, de manière élastique, d'une part en flexion suivant la direction longitudinale L, d'autre part en torsion, par rapport à ses parties extrêmes 44, 45, autour d'un axe parallèle à la direction transversale T.

La poutre 15 formant le verrou est en saillie par rapport à la face supérieure 11 de la paroi de fond 8, un congé de raccordement 46 étant prévu entre la face supérieure 11 et les parties extrêmes 44, 45 du verrou 15 afin de rigidifier la liaison verrou 15 / paroi de fond 8.

Par ailleurs, afin de consolider le verrou 15, les parties extrêmes 44, 45 sont inclinées par rapport au corps 43, en étant recourbées vers l'intérieur du socle 3 pour former avec le corps 43 un angle obtus. En outre, les parties extrêmes 44, 45 sont biseautées vers la paroi de fond 8.

Le corps de verrou 43 présente quant à lui, au niveau de l'encoche 22 et du côté opposé à la portée 18, un décrochement 47 formant renfort et dont une face, tournée vers l'intérieur du socle 3, forme la face transversale 31 de l'encoche 22.

En outre, afin de permettre le flottement du corps de verrou 43 par rapport à la paroi de fond 8, et faciliter ainsi sa déformation d'une part, lors de l'encliquetage du mécanisme 4 et d'autre part, inversement, lors de sa séparation du socle 3, le socle 3 présente une découpe 48 traversante pratiquée dans la paroi de fond 8, qui forme un espace vide autour du corps de verrou 43.

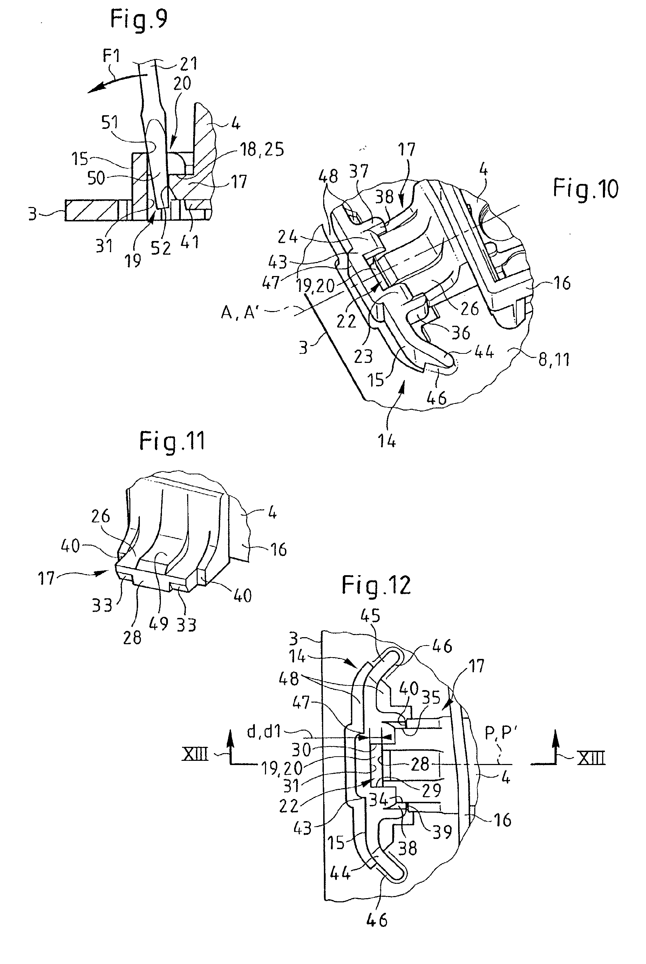

Selon un mode de réalisation illustré sur les figures 10 à 16, la patte 17 du mécanisme 4 comporte une surépaisseur 49 qui saille de sa face supérieure 26, et qui, en position encliquetée du mécanisme 4, se trouve en regard de l'interstice 19. Cette surépaisseur 49 forme un renfort de la patte 17 pour la consolider lors de l'action de l'outil 21 visant à séparer le mécanisme 4 du socle 3.

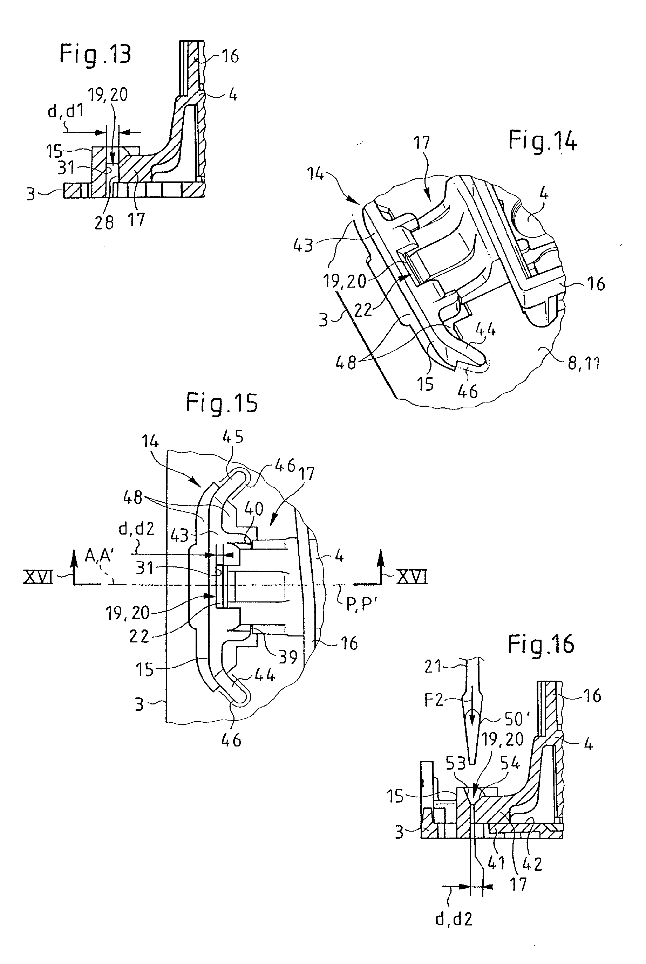

Pour séparer le mécanisme 4 du socle 3, il est procédé en deux étapes :
- introduction, du côté de la face supérieure 11 de la paroi de fond 8 du socle 3, de l'extrémité 50 d'un outil 21 oblong dans l'interstice 19, entre le verrou 15 et la patte 17, cette extrémité 50 présentant des dimensions inférieures à celles de l'interstice 19, et
- pivotement de l'outil 21 autour d'un axe transversal formé par une arête 51 du verrou 15 située au droit de l'interstice 19, l'outil 21 prenant appui, d'une part, sur cette arête 51, et d'autre part, sur une arête 52 de la patte 17, située au droit de l'interstice 19, en faisant levier pour écarter le verrou 15 de la patte 17 jusqu'au dégagement de celle-ci de la portée 18 (ce pivotement est matérialisé par la flèche F1 de la figure 13).

Bien entendu, il est possible de varier la dimension principale d de l'interstice 19, c'est-à-dire, en l'occurrence, la distance séparant la face d'extrémité 28 de la patte 17 de la face transversale 31 de l'encoche 22 ménagée dans le verrou 15.

Ainsi, deux variantes sont représentées sur les figures, suivant la dimension principale de l'interstice 19, à savoir, une première variante représentée sur les figures 10, 12 et 13, et une deuxième variante sur les figures 14, 15 et 16, où la dimension principale d2 de l'interstice 19 est inférieure à la dimension principale d1 de l'interstice 19 de la première variante.

Selon la deuxième variante, la dimension principale d2 de l'interstice 19 est choisie suffisamment faible pour que l'introduction de la partie extrême biseautée 50' d'un outil 21 oblong suivant une direction d'élévation (matérialisée par la flèche F2 de la figure 16) suffise à séparer le mécanisme 4 du socle 3. En général, cet outil 21 est un tournevis d'électricien normalisé à bout plat, et l'on pourra choisir comme dimension principale de l'interstice 19 une valeur inférieure ou égale à la petite largeur du rectangle formé par l'extrémité de ce tournevis normalisé. Toutefois, afin de faciliter son introduction, on peut prévoir deux chanfreins de part et d'autre de l'interstice 19 longitudinalement, à savoir un premier chanfrein 53 du côté du verrou 15 et un deuxième chanfrein 54 du côté de la patte 17.

Suivant une autre variante de réalisation, l'interstice 19 entre la patte 17 et le verrou 15 est réalisé au moyen d'une première encoche 22' pratiquée dans le verrou 15 et d'une deuxième encoche 22" pratiquée dans la patte 17, ces encoches 22', 22" se trouvant en regard en position encliquetée du mécanisme 4.

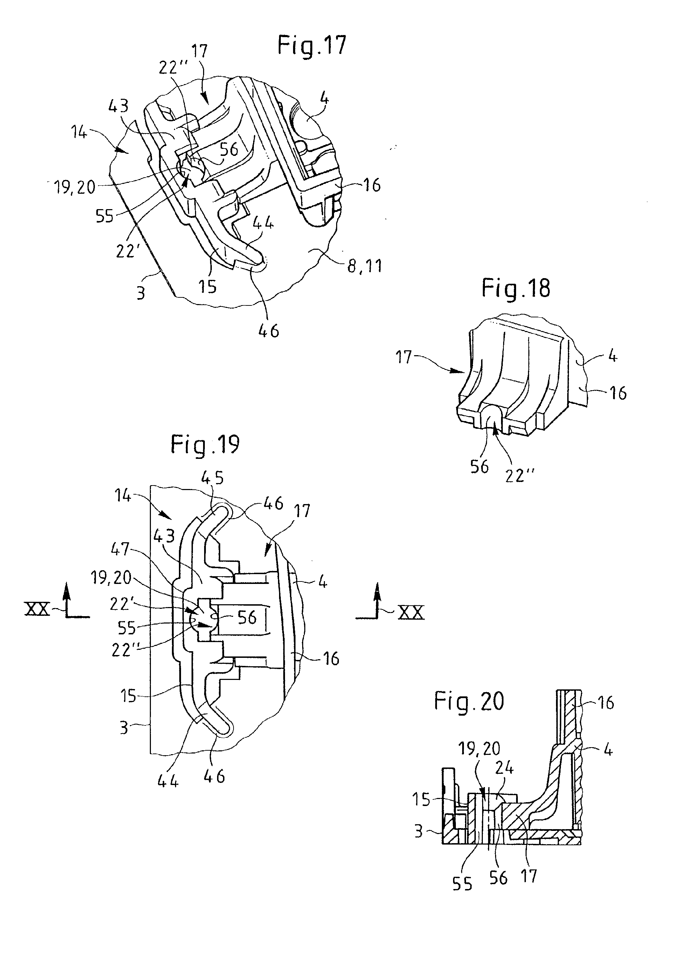

Suivant un mode de réalisation illustré sur les figures 17 à 20, la première encoche 22', réalisée dans le verrou 15, présente un renfoncement 55 en forme de portion de cylindre de révolution dont l'axe est sensiblement parallèle à la direction d'élévation E, tandis que la deuxième encoche 22", réalisée dans la patte 17, comporte, en regard, un renfoncement 55 ayant la forme d'une portion de cylindre de révolution dont l'axe est, en position encliquetée, également sensiblement parallèle à la direction d'élévation E.

De la sorte, cet interstice 19 forme un passage 20 pour un outil oblong à section circulaire tel que la partie extrême d'un tournevis cruciforme au moyen duquel il est possible, de la même manière que précédemment décrit, de séparer le mécanisme 4 du socle 3.

Suivant une autre variante non représentée, l'interstice est réalisé au moyen d'une unique encoche pratiquée dans la patte du mécanisme, l'interstice étant bordé du côté du verrou, par un bord intérieur de la portée formée d'un seul tenant.

Suivant encore une variante, qu'il est possible de combiner aux précédentes, le socle est asymétrique et ne comporte qu'un seul verrou élastique pour l'encliquetage du mécanisme, tandis qu'en regard de ce verrou, de l'autre côté de la zone de réception du mécanisme, il est prévu un logement rigide pour l'emboîtement de l'une des pattes du mécanisme.

## Revendications

1. Ensemble comprenant un mécanisme électrique (4) et un socle (3) comportant une paroi de fond (8) formant support pour ce mécanisme (4), ledit mécanisme (4) étant apte à être maintenu par encliquetage sur ledit socle (3), ledit socle (3) comportant des moyens d'encliquetage (14) comportant un verrou (15) élastiquement flexible qui comporte une portée d'appui (18) en regard de ladite paroi de fond (8), ledit mécanisme (4) comprenant une patte (17) qui, en position encliquetée du mécanisme (4), est engagée entre ladite portée d'appui (18) et ladite paroi de fond (8), ledit ensemble (7) comprenant un interstice (19) entre ladite patte (17) et ledit verrou (15) dans l'axe (A) de la patte (17), et étant **caractérisé en ce qu'**il est aussi prévu un interstice (19) entre ladite portée d'appui (18) et ladite paroi de fond (8), cet interstice (19) formant un passage (20) débouchant à l'opposé de ladite paroi de fond (8), ce passage (20) étant ainsi accessible pour un outil (21) apte à écarter ledit verrou (15) de ladite patte (17) pour dégager celle-ci de ladite portée d'appui (18).

2. Ensemble selon la revendication 1, **caractérisé en ce que** ledit interstice (19) est réalisé au moins en partie au moyen d'une encoche (22) pratiquée dans le verrou (15).

3. Ensemble selon la revendication 2, **caractérisé en ce que** ledit verrou (15) comprend deux crans de verrouillage (23, 24) espacés, de part et d'autre de ladite encoche (22).

4. Ensemble selon la revendication 3, **caractérisé en ce que** chaque cran (23, 24) présente une face d'appui (25) en regard de la paroi de fond (8), contre laquelle est apte à venir en appui une face (26) dite supérieure de la patte (17) du mécanisme (4), lesdites faces d'appui (25) étant coplanaires et formant ensemble ladite portée d'appui (18).

5. Ensemble selon la revendication 4, **caractérisé en ce que** chaque cran (23, 24) présente une face de butée (27) sensiblement perpendiculaire à ladite face d'appui (25), et contre laquelle est apte à venir en appui une face d'extrémité (28) de la patte (17) du mécanisme (4), les faces de butée (27) étant coplanaires, et **en ce que** ladite encoche (22) présente une face (31), bordant ledit interstice (19) du côté du verrou (15), qui est décalée par rapport auxdites faces de butée (27), vers l'extérieur du socle (3).

6. Ensemble selon la revendication 4 ou 5, **caractérisé en ce que** chaque cran (23, 24) présente, du côté opposé à sa face d'appui (25), une surface courbe (32) sur laquelle est apte à appuyer et glisser, lors de l'encliquetage du mécanisme (4), un chanfrein (33) pratiqué dans la patte (17) de celui-ci, en vue d'écarter le verrou (15) de la patte (17) pour permettre l'encliquetage du mécanisme (4) sur le socle (3).

7. Ensemble selon l'une des revendications 2 à 6, **caractérisé en ce que** ledit verrou (15) présente, de part et d'autre desdits crans (23, 24), deux butées (34, 35) en regard, contre lesquelles est apte à venir en appui ladite patte (17), ces butées (34, 35) étant propres à assurer l'immobilisation de ladite patte (17) suivant une direction, dite transversale, sensiblement perpendiculaire à la direction d'encliquetage et à l'axe (A) de la patte (17).

8. Ensemble selon la revendication 7, **caractérisé en ce que** ledit verrou (15) présente deux faces inclinées (38), contre lesquelles est apte à appuyer et glisser, lors de l'encliquetage du mécanisme (4), la patte (17) de celui-ci, ces faces inclinées (38) étant propres à assurer le guidage et le positionnement de la patte (17) par rapport au verrou (15), suivant la direction transversale.

9. Ensemble selon la revendication 8, **caractérisé en ce que** lesdites butées (34, 35) et lesdites faces inclinées (38) sont adjacentes.

10. Ensemble selon la revendication 11, **caractérisé en ce que** ledit verrou (15) comporte deux branches (36, 37) en saillie qui encadrent lesdits crans (23, 24), chaque branche (36, 37) portant une dite butée (34, 35) et une dite face inclinée (38).

11. Ensemble selon la revendication 10, **caractérisé en ce que** chaque branche (36, 37) présente une face d'extrémité (39) contre laquelle est apte à venir en appui, en position encliquetée dudit mécanisme (4), une butée (40) de la patte (17), en regard.

12. Ensemble selon l'une des revendications 1 à 11, **caractérisé en ce que** ledit interstice (19) est réalisé au moins en partie au moyen d'une encoche (22) pratiquée dans la patte (17).

13. Ensemble selon l'une des revendications 1 à 12, **caractérisé en ce que** le socle (3) comporte une languette (41) flexible saillant de la paroi de fond (8) en direction du verrou (15), sur laquelle est apte à venir en appui la patte (17) du mécanisme (4), cette languette (41) formant un ressort apte à solliciter la patte (17) du mécanisme (4) pour l'éloigner de la paroi de fond (8).

14. Ensemble selon l'une des revendications 1 à 13, **caractérisé en ce que** la patte (17) dudit mécanisme (4) comporte une surépaisseur (49) formant renfort, saillant d'une face (26) dite supérieure de la patte (17), et qui, en position encliquetée du mécanisme (4), se trouve en regard dudit interstice (19).

15. Socle adapté à entrer dans la composition d'un ensemble (7) selon l'une des revendications 1 à 14, ledit socle (3) comportant une paroi de fond (8) formant support d'un mécanisme électrique (4) dans la composition du même ensemble (7), ainsi que des moyens d'encliquetage (14) comportant un verrou (15) élastiquement déformable en flexion suivant une direction dite longitudinale, et qui comporte une portée d'appui (18) en regard de ladite paroi de fond (8), **caractérisé en ce que** ledit verrou (15) comprend deux crans de verrouillage (23, 24) espacés, séparés par une encoche (22) pratiquée dans le verrou (15), ladite encoche (22) formant un passage (20) débouchant à l'opposé de ladite paroi de fond (8).

16. Socle selon la revendication 15, **caractérisé en ce que** chaque cran (23, 24) présente une face d'appui (25) en regard de ladite paroi de fond (8), lesdites faces d'appui (25) étant coplanaires et formant ensemble ladite portée d'appui (18).

17. Socle selon la revendication 16, **caractérisé en ce que** chaque cran (23, 24) présente une face de butée (27) perpendiculaire à la direction longitudinale, lesdites faces de butée (27) étant coplanaires, ladite encoche (22) présentant une face (31) perpendiculaire à la direction longitudinale, décalée par rapport auxdites faces de butée (27) vers l'extérieur du socle (3).

18. Socle selon la revendication 17, **caractérisé en ce que** chaque cran (23, 24) présente, du côté opposé à ladite face d'appui (25), une surface courbe (32).

19. Socle selon l'une des revendications 15 à 18, **caractérisé en ce que** ledit verrou (15) se présente sous la forme d'une poutre, étendue suivant une direction dite transversale perpendiculaire à la direction longitudinale, et qui comporte un corps (43) flottant par rapport à ladite paroi de fond (8), ledit corps (43) portant lesdits crans (23, 24) et étant terminé par deux parties extrêmes (44, 45) rigidement ancrées dans la paroi de fond (8).

20. Socle selon la revendication 19, **caractérisé en ce que** ladite poutre (15) est déformable, de manière élastique, en flexion suivant la direction longitudinale, et en torsion autour d'un axe parallèle à la direction transversale.

21. Socle selon la revendication 19 ou 20, **caractérisé en ce que** le verrou (15) est en saillie par rapport à ladite paroi de fond (8), et **en ce que** le socle (3) présente un congé de raccordement (46) entre ladite paroi de fond (8) et lesdites parties extrêmes (44, 45) du verrou (15).

22. Socle selon la revendication 21, **caractérisé en ce que** lesdites parties extrêmes (44, 45) sont inclinées par rapport au corps de verrou (43), en étant recourbées du côté du verrou (15) où se trouve les crans (23, 24).

23. Socle selon la revendication 22, **caractérisé en ce que** lesdites parties extrêmes (44, 45) sont biseautées vers la paroi de fond (8).

24. Socle selon l'une des revendications 19 à 23, **caractérisé en ce que** ledit corps de verrou (43) présente, au niveau de ladite encoche (22) et du côté opposé aux dits crans (23, 24), un décrochement (47) formant renfort.

25. Socle selon l'une des revendications 19 à 24, **caractérisé en ce que** ledit corps de verrou (43) comporte deux branches (36, 37) en saillie qui encadrent lesdits crans (23, 24), chaque branche (36, 37) présentant une surface de butée (34, 35) étendue parallèlement à la direction longitudinale et perpendiculairement à la paroi de fond (8).

26. Socle selon la revendication 25, **caractérisé en ce que** chaque branche (36, 37) présente une face (38) dite de guidage, située dans le prolongement de ladite surface de butée (34, 35) du côté opposé à la paroi de fond (8), et inclinée par rapport à ladite surface de butée (34, 35).

27. Socle selon l'une des revendications 19 à 26, **caractérisé en ce que** ledit socle (3) présente une découpe (48) pratiquée dans la paroi de fond (8), formant un espace vide autour dudit corps de verrou (43).

28. Socle selon l'une des revendications 15 à 27, **caractérisé en ce qu'**il comprend une languette (41) élastiquement flexible, saillant de la paroi de fond (8) en direction dudit verrou (15), ladite languette (41) présentant une face (42), dite supérieure qui, en l'absence de sollicitation, est inclinée par rapport à ladite paroi de fond (8).

29. Socle selon l'une des revendications 15 à 28, **caractérisé en ce que** ladite encoche (22) présente un renfoncement (55) en forme de portion de cylindre de révolution d'axe perpendiculaire à la paroi de fond (8).

30. Mécanisme adapté à entrer dans la composition d'un ensemble (7) selon l'une des revendications 1 à 14, apte a être maintenu par encliquetage sur un socle (3) adapté à entrer dans la composition du même ensemble (7), ledit mécanisme (4) comportant à cet effet une patte (17) en saillie, apte à coopérer avec des moyens d'encliquetage (14) appartenant audit socle (3), **caractérisé en ce qu'**une encoche (22") est pratiquée dans ladite patte (17), dans l'axe (A') de celle-ci..

31. Mécanisme selon la revendication 30, **caractérisé en ce que** ladite encoche (22") comporte un renfoncement (56) ayant la forme d'une portion de cylindre.

32. Appareil électrique du type comportant un socle (3) pour sa fixation à une paroi (2), un mécanisme (4) apte à être maintenu par encliquetage sur le socle (3) qui forme un support dudit mécanisme (4), ainsi qu'une coiffe (6) apte à recouvrir le socle (3) et le mécanisme (4) pour former une façade d'utilisation de l'appareil (1), ledit socle (3) et ledit mécanisme (4) formant un ensemble (7) selon l'une des revendications 1 à 14.

33. Procédé pour séparer du socle (3) d'un ensemble selon l'une des revendications 1 à 14, un mécanisme (4) du même ensemble (7) préalablement encliqueté sur ledit socle (3), **caractérisé en ce qu'**il comporte les étapes suivantes :
- introduction, du côté du socle (3) où se trouve le mécanisme (4), d'un outil (21) oblong dans l'interstice (19) entre le verrou (15) et la patte (17),
- pivotement de l'outil (21) autour d'un axe formé par une arête (51) du verrou (15) située au droit dudit interstice (19), l'outil (21) prenant appui, d'une part, sur cette arête (51), d'autre part, sur une arête (52) de la patte (17), située au droit dudit interstice (19), pour écarter ledit verrou (15) de ladite patte (17) jusqu'au dégagement de celle-ci de ladite portée d'appui (18).

## Patentansprüche

1. Anordnung mit einem elektrischen Mechanismus (4) und einem Sockel (3), der eine Rückwand (8) aufweist, welche einen Träger für den Mechanismus (4) bildet, wobei der Mechanismus (4) am Sockel (3) durch Einrasten gehalten zu werden vermag, wobei der Sockel Rastmittel (14) mit einem elastisch biegbaren Riegel (15) aufweist, der der Rückwand (8) gegenüber eine Auflagefläche (18) aufweist, wobei der Mechanismus (4) einen Arm (17) umfasst, der in der Raststellung des Mechanismus (4) zwischen der Auflagefläche (18) und der Rückwand (8) eingeführt ist, wobei die Anordnung (7) einen Spalt (19) zwischen dem Arm (17) und dem Riegel (15) in der Achse (A) des Arms (17) aufweist und **dadurch gekennzeichnet ist, dass** auch ein Spalt (19) zwischen der Auflagefläche (18) und der Rückwand (8) vorgesehen ist, wobei der Spalt (19) einen Durchlass (20) bildet, der an der der Rückwand (8) abgewandten Seite mündet, wobei der Durchlass (20) somit für ein Werkzeug (21) zugänglich ist, das den Riegel (15) von dem Arm (17) abzurücken vermag, um diesen von der Auflagefläche (18) zu lösen.

2. Anordnung nach Anspruch 1,
**dadurch gekennzeichnet, dass** der Spalt (19) wenigstens zum Teil mittels einer in dem Riegel (15) ausgebildeten Aussparung (22) realisiert ist.

3. Anordnung nach Anspruch 2,
**dadurch gekennzeichnet, dass** der Riegel (15) beidseits der Aussparung (22) zwei voneinander beabstandete Verriegelungsrasten (23, 24) umfasst.

4. Anordnung nach Anspruch 3,
**dadurch gekennzeichnet, dass** jede Raste (23, 24) der Rückwand (8) gegenüber eine Anlagefläche (25) aufweist, gegen die eine als Oberseite bezeichnete Fläche (26) des Arms (17) des Mechanismus (4) in Anlage zu gelangen vermag, wobei die Anlageflächen (25) komplanar sind und zusammen die Auflagefläche (18) bilden.

5. Anordnung nach Anspruch 4,
**dadurch gekennzeichnet, dass** jede Raste (23, 24) eine zu der Anlagefläche (25) im Wesentlichen senkrechte Anschlagfläche (27) aufweist, gegen die eine Endfläche (28) des Arms (17) des Mechanismus (4) in Anlage zu gelangen vermag, wobei die Anschlagflächen (27) komplanar sind, und dass die Aussparung (22) eine den Spalt (19) auf der Seite des Riegels (15) begrenzende Fläche (31) aufweist, die bezüglich der Anschlagflächen (27) zur Außenseite des Sockels (3) versetzt ist.

6. Anordnung nach Anspruch 4 oder 5,
**dadurch gekennzeichnet, dass** jede Raste (23, 24) auf der ihrer Anlagefläche (25) abgewandten Seite eine gebogene Fläche (32) aufweist, auf der eine in dem Arm (17) ausgebildete Schräge (33) aufzuliegen und beim Einrasten des Mechanismus (4) zu gleiten vermag, um den Riegeln (15) von dem Arm (17) abzurücken, um das Einrasten des Mechanismus (4) auf dem Sockel (3) zu ermöglichen.

7. Anordnung nach einem der Ansprüche 2 bis 6,
**dadurch gekennzeichnet, dass** der Riegel (15) beidseits der Rasten (23, 24) zwei sich gegenüberliegende Anschläge (34, 35) aufweist, gegen die der Arm (17) in Anlage gebracht zu werden vermag, wobei die Anschläge (34, 35) den Arm (17) in einer zur Einrastrichtung und zur Achse (A) des Arms (17) im Wesentlichen senkrechten Querrichtung zu blockieren vermögen.

8. Anordnung nach Anspruch 7,
**dadurch gekennzeichnet, dass** der Riegel (15) zwei schräge Flächen (38) aufweist, auf denen der Arm (17) des Mechanismus (4) bei dessen Einrasten aufzuliegen und zu gleiten vermag, wobei die schrägen Flächen (38) das Führen und Positionieren des Arms (17) bezüglich des Riegels (15) in der Querrichtung zu gewährleisten vermögen.

9. Anordnung nach Anspruch 8,
**dadurch gekennzeichnet, dass** die Anschläge (34, 35) und die schrägen Flächen (38) aneinander angrenzen.

10. Anordnung nach Anspruch 11,
**dadurch gekennzeichnet, dass** der Riegel (15) zwei vorspringende Schenkel (36, 37) umfasst, die die Rasten (23, 24) umgrenzen, wobei jeder Schenkel (36, 37) einen der Anschläge (34, 35) und eine der schrägen Flächen (38) trägt.

11. Anordnung nach Anspruch 10,
**dadurch gekennzeichnet, dass** jeder Schenkel (36, 37) eine Endfläche (39) aufweist, gegen die in der Raststellung des Mechanismus (4) ein Anschlag (40) des Arms (17) gegenüberliegend in Anlage zu gelangen vermag.

12. Anordnung nach einem der Ansprüche 1 bis 11,
**dadurch gekennzeichnet, dass** der Spalt (19) wenigstens zum Teil mittels einer in dem Arm (17) ausgebildeten Aussparung (22) realisiert ist.

13. Anordnung nach einem der Ansprüche 1 bis 12,
**dadurch gekennzeichnet, dass** der Sockel (3) eine an der Rückwand (8) in Richtung des Riegels (15) vorstehende flexible Zunge (41) umfasst, an der der Arm (17) des Mechanismus (4) in Anlage zu gelangen vermag, wobei die Zunge (41) eine Feder bildet, die den Arm (17) des Mechanismus (4) zu beanspruchen vermag, um diesen von der Rückwand (8) abzurücken.

14. Anordnung nach einem der Ansprüche 1 bis 13,
**dadurch gekennzeichnet, dass** der Arm (17) des Mechanismus (4) eine von einer als Oberseite bezeichneten Fläche (26) des Arms (17) vorspringende, eine Verstärkung bildende Verdickung (49) aufweist, die sich in der Raststellung des Mechanismus (4) gegenüber dem Spalt (19) befindet.

15. Sockel, der Bestandteil einer Anordnung (7) nach einem der Ansprüche 1 bis 14 zu sein vermag, wobei der Sockel (3) eine Rückwand (8) umfasst, die einen Träger für einen elektrischen Mechanismus (4) bildet, der Bestandteil derselben Anordnung (7) ist, sowie Rastmittel (14), die einen in einer Längsrichtung elastisch biegeverformbaren Riegel (15) umfassen, der der Rückwand (8) gegenüber eine Auflagefläche (18) aufweist,
**dadurch gekennzeichnet, dass** der Riegel (15) zwei voneinander beabstandete, Verriegelungsrasten (23, 24) umfasst, die durch die in dem Riegel (15) ausgebildete Aussparung (22) voneinander getrennt sind, wobei die Aussparung (22) einen Durchlass (20) bildet, der an der der Rückwand (8) abgewandten Seite mündet.

16. Sockel nach Anspruch 15,
**dadurch gekennzeichnet, dass** jede Raste (23, 24) eine Anlagefläche (25) gegenüber der Rückwand (8) aufweist, wobei die Anlageflächen (25) komplanar sind und zusammen die Auflagefläche (18) bilden.

17. Sockel nach Anspruch 16,
**dadurch gekennzeichnet, dass** jede Raste (23, 24) senkrecht zur Längsrichtung eine Anschlagfläche (27) aufweist, wobei die Anschlagflächen (27) komplanar sind, wobei die Aussparung (22) senkrecht zur Längsrichtung eine Fläche (31) aufweist, die bezüglich der Anschlagflächen (27) zur Außenseite des Sockels (3) versetzt ist.

18. Sockel nach Anspruch 17,
**dadurch gekennzeichnet, dass** jede Raste (23, 24) auf der der Anlagefläche (25) abgewandten Seite eine gebogene Fläche (32) aufweist.

19. Sockel nach einem der Ansprüche 15 bis 18,
**dadurch gekennzeichnet, dass** der Riegel (15) die Form eines Trägers hat, der sich in einer senkrecht zur Längsrichtung verlaufenden Querrichtung erstreckt und der einen bezüglich der Rückwand (8) schwimmenden Körper (43) aufweist, wobei der Körper (43) die Rasten (23, 24) trägt und in zwei Endstücken (44, 45) endet, die in der Rückwand (8) starr verankert sind.

20. Sockel nach Anspruch 19,
**dadurch gekennzeichnet, dass** der Träger (15) in Längsrichtung elastisch biegeverformbar und um eine zur Querrichtung parallele Achse elastisch verdrehverformbar ist.

21. Sockel nach einem der Ansprüche 19 oder 20,
**dadurch gekennzeichnet, dass** der Riegel (15) bezüglich der Rückwand (8) vorsteht und dass der Sockel (3) zwischen der Rückwand (8) und den Endstücken (44, 45) des Riegels (15) eine Auskehlung (46) aufweist.

22. Sockel nach Anspruch 21,
**dadurch gekennzeichnet, dass** die Endstücke (44, 45) bezüglich des Riegelkörpers (43) geneigt sind, wobei sie auf der Seite des Riegels (15), auf der sich die Rasten (23, 24) befinden, gekrümmt sind.

23. Sockel nach Anspruch 22,
**dadurch gekennzeichnet, dass** die Endstücke (44, 45) in Richtung der Rückwand (8) abgeschrägt sind.

24. Sockel nach einem der Ansprüche 19 bis 23,
**dadurch gekennzeichnet, dass** der Riegelkörper (43) in Höhe der Aussparung (22) und auf der den Rasten (23, 24) abgewandten Seite einen eine Verstärkung bildenden Versatz (47) aufweist.

25. Sockel nach einem der Ansprüche 19 bis 24,
**dadurch gekennzeichnet, dass** der Riegelkörper (43) zwei vorspringende Schenkel (36, 37) umfasst, die die Rasten (23, 24) umgrenzen, wobei jeder Schenkel (36, 37) eine Anschlagfläche (34, 35) aufweist, die sich parallel zur Längsrichtung und senkrecht zur Rückwand (8) erstreckt.

26. Sockel nach Anspruch 25,
**dadurch gekennzeichnet, dass** jeder Schenkel (36, 37) eine als Führung bezeichnete Fläche (38) aufweist, die in der Verlängerung der Anschlagfläche (34, 35) auf der der Rückwand (8) abgewandten Seite angeordnet ist und bezüglich der Anschlagfläche (34, 35) geneigt ist.

27. Sockel nach einem der Ansprüche 19 bis 26,
**dadurch gekennzeichnet, dass** der Sockel (3) einen in der Rückwand (8) ausgebildeten Einschnitt (48) aufweist, der um den Riegelkörper (43) herum eine Lücke bildet.

28. Sockel nach einem der Ansprüche 15 bis 27,
**dadurch gekennzeichnet, dass** er eine an der Rückwand (8) in Richtung des Riegels (15) vorstehende flexible Zunge (41) umfasst, die eine als Oberseite bezeichnete Fläche (42) aufweist, die bei fehlender Beanspruchung bezüglich der Rückwand (8) geneigt ist.

29. Sockel nach einem der Ansprüche 15 bis 28,
**dadurch gekennzeichnet, dass** die Aussparung (22) eine Vertiefung (55) in Form eines Rotationszylinderstücks mit einer zur Rückwand (8) senkrechten Achse aufweist.

30. Elektrischer Mechanismus, der Bestandteil einer Anordnung (7) nach einem der Ansprüche 1 bis 14 zu sein vermag, der durch Einrasten auf einem Sockel (3) gehalten zu werden vermag, welcher Bestandteil derselben Anordnung (7) zu sein vermag, wobei der Mechanismus (4) hierzu einen vorspringenden Arm (17) aufweist, der mit zum Sockel (3) gehörenden Rastmitteln (14) zusammenzuwirken vermag, **dadurch gekennzeichnet, dass** eine Aussparung (22") in dem Arm (17) in dessen Achse (A') ausgebildet ist.

31. Mechanismus nach Anspruch 30,
**dadurch gekennzeichnet, dass** die Aussparung (22") eine Vertiefung (56) in Form eines Zylinderstücks aufweist.

32. Elektrisches Installationsgerät des Typs mit einem Sockel (3) zu seiner Befestigung an einer Wand (2), einem elektrischen Mechanismus (4), der auf dem Sockel (3), der einen Träger für den Mechanismus (4) bildet, durch Einrasten gehalten zu werden vermag, sowie einer Abdeckung (6), die den Sockel (3) und den Mechanismus (4) zu verdecken vermag, um eine Frontblende zur Benutzung des Geräts (1) zu bilden, wobei der Sockel (3) und der Mechanismus (4) eine Anordnung (7) nach einem der Ansprüche 1 bis 14 bilden.

33. Verfahren zum Entfernen eines Mechanismus (4) von dem Sockel (3) einer Anordnung nach einem der Ansprüche 1 bis 14, der zu derselben Anordnung (7) gehörend zuvor auf dem Sockel (3) eingerastet war,
**dadurch gekennzeichnet, dass** es die folgenden Schritte umfasst:
- Einführen eines länglichen Werkzeugs (21) in den Spalt (19) zwischen den Riegel (15) und den Arm (17) auf der Seite des Sockels (3), auf der sich der Mechanismus (4) befindet,
- Schwenken des Werkzeugs (21) um eine Achse, die von einer rechtwinklig zu dem Spalt (19) angeordneten Kante (51) des Riegels (15) gebildet ist, wobei das Werkzeug (21) einerseits auf dieser Kante (51) und andererseits auf einer rechtwinklig zu dem Spalt (19) angeordneten Kante (52) des Arms (17) in Anlage kommt, um den Riegel (15) von dem Arm (17) soweit abzurücken, bis sich dieser von der Auflagefläche (18) löst.

## Claims

1. Assembly comprising an electrical mechanism (4) and a base (3) comprising a bottom wall (8) supporting the mechanism (4), said mechanism (4) being capable of being held on said base (3) by means of snap-on engagement, said base (3) comprising snap-on engagement means (14) comprising a resiliently flexible lock (15) which comprises a supporting bearing surface (18) opposing said bottom wall (8), said mechanism (4) comprising a tab (17) which, when the mechanism (4) is in the snapped-on position, is engaged between said bearing surface (18) and said bottom wall (8), said assembly (7) comprising a recess (19) between said tab (17) and said lock (15) in the axis (A) of the tab (17) and being **characterised in that** a recess (19) is also provided between said bearing surface (18) and said bottom wall (8), said recess (19) forming a passage (20) which opens opposite said bottom wall (8), this passage (20) thus being accessible for a tool (21) which is capable of moving said lock (15) away from said tab (17) to disengage said tab from said bearing surface (18).

2. Assembly according to claim 1, **characterised in that** said recess (19) is produced at least in part by means of a slot (22) formed in the lock (15).

3. Assembly according to claim 2, **characterised in that** said lock (15) comprises two locking notches (23, 24) which are spaced apart on either side from said slot (22).

4. Assembly according to claim 3, **characterised in that** each notch (23, 24) has a support face (25) opposing the bottom wall (8) and against which a face (26), designated an upper face, of the tab (17) of the mechanism (4) can rest, said support faces (25) being coplanar and together forming said bearing surface (18).

5. Assembly according to claim 4, **characterised in that** each notch (23, 24) has a stop face (27) which is substantially perpendicular to said support face (25) and against which an end face (28) of the tab (17) of the mechanism (4) can rest, the stop faces (27) being coplanar, and **in that** said slot (22) has a face (31) which extends alongside said recess (19) on the side of the lock (15) and is offset from said stop faces (27) towards the exterior of the base (3).

6. Assembly according to either claim 4 or claim 5, **characterised in that** each notch (23, 24) has, on the side opposite its support face (25), a curved surface (32) on which a chamfer (33) formed in the tab (17) thereof can rest and slide, while the mechanism (4) is being snapped on, in order to move the lock (15) away from the tab (17) to allow the mechanism (4) to be snapped onto the base (3).

7. Assembly according to any of claims 2 to 6, **characterised in that** said lock (15) has, on either side of said notches (23, 24), two opposing stops (34, 35), against which said tab (17) can rest, said stops (34, 35) being suitable for ensuring that said tab (17) cannot move in one direction, designated a transverse direction, substantially perpendicular to the snap-on direction and to the axis (A) of the tab (17).

8. Assembly according to claim 7, **characterised in that** said lock (15) has two inclined faces (38) against which the tab (17) of the mechanism can rest and slide while said mechanism (4) is being snapped on, said inclined faces (38) being suitable for ensuring that the tab (17) is guided and positioned relative to the lock (15) in the transverse direction.

9. Assembly according to claim 8, **characterised in that** said stops (34, 35) and said inclined faces (38) are adjacent.

10. Assembly according to claim 11, **characterised in that** said lock (15) comprises two projecting arms (36, 37) which enclose said notches (23, 24), each arm (36, 37) carrying one said stop (34, 35) and one said inclined face (38).

11. Assembly according to claim 10, **characterised in that** each arm (36, 37) has an end face (39) against which, when the mechanism (4) is in the snapped-on position, one stop (40) of the tab (17) can rest opposite thereto.

12. Assembly according to any of claims 1 to 11, **characterised in that** said recess (19) is produced at least in part by means of a slot (22) formed in the tab (17).

13. Assembly according to any of claims 1 to 12, **characterised in that** the base (3) comprises a flexible tongue (41) projecting from the bottom wall (8) towards the lock (15), on which tongue the tab (17) of the mechanism (4) can rest, said tongue (41) forming a spring capable of loading the tab (17) of the mechanism (4) in order to move said tab away from the bottom wall (8).

14. Assembly according to any of claims 1 to 13, **characterised in that** the tab (17) of said mechanism (4) has a reinforcing thicker portion (49) which projects from one face (26), designated an upper face, of the tab (17) and is opposite said recess (19) when the mechanism (4) is in the snapped-on position.

15. Base capable of forming part of an assembly (7) according to any of claims 1 to 14, said base (3) comprising a bottom wall (8) supporting an electrical mechanism (4) in the same assembly (7), and snap-on engagement means (14) comprising a lock (15) which is resiliently deformable by bending in a direction, designated a longitudinal direction, and which comprises a bearing surface (18) opposing said bottom wall (8), **characterised in that** said lock (15) comprises two spaced-apart locking notches (23, 24) separated by a slot (22) formed in the lock (15), said slot (22) forming a passage (20) which opens opposite said bottom wall (8).

16. Base according to claim 15, **characterised in that** each notch (23, 24) has a support face (25) opposing the bottom wall (8), said support faces (25) being coplanar and together forming said bearing surface (18).

17. Base according to claim 16, **characterised in that** each notch (23, 24) has a stop face (27) perpendicular to the longitudinal direction, said stop faces (27) being coplanar, said slot (22) having a face (31) which is perpendicular to the longitudinal direction and is offset from said stop faces (27) towards the exterior of the base (3).

18. Base according to claim 17, **characterised in that** each notch (23, 24) has a curved surface (32) on the side opposite its support face (25).

19. Base according to any of claims 15 to 18, **characterised in that** said lock (15) is in the form of a beam, extending in a direction, designated a transverse direction, perpendicular to the longitudinal direction, and comprises a member (43) which floats relative to said bottom wall (8), said member (43) carrying said notches (23, 24) and ending in two end parts (44, 45) which are rigidly anchored in the bottom wall (8).

20. Base according to claim 19, **characterised in that** said beam (15) can be deformed in a resilient manner by bending in the longitudinal direction and by torsion about an axis parallel to the transverse direction.

21. Base according to either claim 19 or claim 20, **characterised in that** the lock (15) projects relative to the bottom wall (8), and **in that** the base (3) has a fillet (46) between said bottom wall (8) and said end parts (44, 45) of the lock (15).

22. Base according to claim 21, **characterised in that** said end parts (44, 45) are inclined relative to the lock member (43), by being curved on the side of the lock (15) where the notches (23, 24) are located.

23. Base according to claim 22, **characterised in that** said end parts (44, 45) are bevelled towards the bottom wall (8).

24. Base according to any of claims 19 to 23, **characterised in that** said lock member (43) has, at said slot (22) and on the side opposite said notches (23, 24), a reinforcing step (47).

25. Base according to any of claims 19 to 24, **characterised in that** said lock member (43) comprises two projecting arms (36, 37) which enclose said notches (23, 24), each arm (36, 37) having a stop surface (34, 35) extending in parallel with the longitudinal direction and perpendicularly to the bottom wall (8).

26. Base according to claim 25, **characterised in that** each arm (36, 37) has a face (38), designated a guide face, located in the extension of said stop surface (34, 35) on the side opposite the bottom wall (8) and inclined relative to said stop surface (34, 35).

27. Base according to any of claims 19 to 26, **characterised in that** said base (3) has a cut-out (48) which is formed in the bottom wall (8) and forms an empty space around said lock member (43).

28. Base according to any of claims 15 to 27, **characterised in that** it comprises a resiliently flexible tongue (41) projecting from the bottom wall (8) towards the lock (15), said tongue (41) having a face (42), designated an upper face, which, in the absence of loading, is inclined relative to said bottom wall (8).

29. Base according to any of claims 15 to 28, **characterised in that** said slot (22) has a recess (55) in the form of a cylindrical portion which rotates about an axis perpendicular to the bottom wall (8).

30. Mechanism capable of forming part of an assembly (7) according to any of claims 1 to 14, able to be held by being snapped onto a base (3) capable of forming part of the same assembly (7), said mechanism (4) comprising for this purpose a projecting tab (17) able to cooperate with snap-on engagement means (14) belonging to said base (3), **characterised in that** a slot (22") is formed in said tab (17) in the axis (A') of said tab.

31. Mechanism according to claim 30, **characterised in that** said slot (22") comprises a recess (56) in the shape of a cylindrical portion.

32. Electrical device of the type comprising a base (3) for fixing said device to a wall (2), an electrical mechanism (4) capable of being snapped onto the base (3) which forms a support for said mechanism (4), and a cap (6) capable of covering the base (3) and the mechanism (4) to form a usage cover for the device (1), said base (3) and said mechanism (4) forming an assembly (7) according to any of claims 1 to 14.

33. Method for separating, from the base (3) of an assembly according to any of claims 1 to 14, a mechanism (4) of said assembly (7) which has been previously snapped onto said base (3), **characterised in that** said method comprises the following steps:
- introducing, on the side of the base (3) where the mechanism (4) is located, an oblong tool (21) into the recess (19) between the lock (15) and the tab (17),
- pivoting the tool (21) about an axis formed by an edge (51), to the right of said recess (19), of the lock (15), the tool (21) resting on both this edge (51) and on an edge (52), to the right of said recess (19), of the tab (17), in order to move said lock (15) away from said tab (17) until said tab is disengaged from said bearing surface (18).
